# FASCICULE DE BREVET EUROPEEN

(11) **EP 4 141 299 B1**
(45) Date de publication et mention de la délivrance du brevet: **19.02.2025**
(21) Numéro de dépôt: 22188622.9
(22) Date de dépôt: 03.08.2022
(51) Int. Cl.: F16K 15/14, E02B 8/04, E03F 7/04

(54) **CLAPET ANTI-RETOUR À MEMBRANE**
RÜCKSCHLAGVENTIL MIT MEMBRAN
CHECK VALVE WITH MEMBRANE

(30) Priorité: 27.08.2021 FR 2109000; 27.08.2021 FR 2109003
(43) Date de publication de la demande: 01.03.2023
(73) Titulaire: Norham, 26260 Saint-Donat-sur-l'Herbasse (FR)
(72) Inventeur: PALLY, Sébastien, 26750 GEYSSAN (FR); GUINAUDEAU, Etienne, 38840 SAINT LATTIER (FR); AUBERT, Maxime, 26260 SAINT-DONAT-SUR-L'HERBASSE (FR)
(74) Mandataire: Talbot, Alexandre

(56) Documents cités:
- EP-A1- 2 706 157
- WO-A1-2018/006949
- WO-A1-2020/254801
- SE-C2- 536 244
- US-A- 5 881 772
- US-A1- 2011 132 474
- US-A1- 2020 399 879
- US-B2- 8 439 078

## Description

### Domaine technique

L'invention concerne un clapet anti-retour pour canalisation.

### État de la technique

Il est classique d'utiliser des canalisations pour faire circuler des liquides. On fonctionnalise ces canalisations au moyen de dispositifs qui sont fixés sur les parois de la canalisation de manière à interagir avec le liquide. Il est connu de fixer des dispositifs tels que des clapets anti-retour ou des obturateurs. On installe un clapet-anti-retour pour autoriser un flux dans un sens et pour bloquer un flux dans le sens opposé. Il est connu de réaliser un clapet anti-retour au moyen d'un cône fixé à la canalisation. Lorsque le liquide s'insère dans la gueule du cône, la pression exercée assure l'étanchéité. Au contraire, lorsque le flux de liquide appuie sur la paroi externe, cela induit une déformation de la partie inférieure du cône qui peut alors autoriser le passage du flux de liquide. Un tel mode de réalisation est illustré dans le document WO 2018/006949. Il ressort que cette configuration n'est pas pratique à utiliser. Elle nécessite la présence qu'une quantité importante de liquide dans la canalisation pour obtenir l'ouverture du clapet.

Les documents US 2011/132474 A1 et WO 2020/254801 A1 divulguent un clapet anti-retour avec une entrée circulaire et une sortie en forme de U. La sortie possède une lèvre en arc de cercle et qui se déforme avec la pression de liquide. Là encore, cela nécessite une quantité importante de liquide pour basculer de la position fermée à la position passante.

Le document US 2020/399879 A1 divulgue un clapet anti-retour qui est de forme conique et réalisé par des sections circulaires qui s'étendent d'une extrémité à l'autre du clapet. La déformation de l'entrée du clapet par un flux d'eau se traduit par une déformation de la section circulaire de l'entrée.

### Exposé de l'invention

Un objet de l'invention consiste à pallier ces inconvénients, et plus particulièrement à fournir un clapet anti-retour qui assure le blocage d'un flux de fluide selon une première direction et qui autorise un flux de fluide selon une seconde direction opposée avec un débit plus faible que les configurations de l'art antérieur.

On tend à résoudre ces inconvénients au moyen d'un clapet anti-retour pour canalisation comportant :
- une porte configurée pour autoriser le passage d'un fluide dans une canalisation selon un premier sens de déplacement et pour interdire le passage du fluide dans la canalisation selon un deuxième sens de déplacement opposé au premier sens de déplacement, la porte possédant une portion fixe et une portion mobile, la portion mobile étant mobile par rapport à la portion fixe par déformation de la portion mobile, la porte étant à section décroissante depuis une première extrémité jusqu'à une deuxième extrémité selon le deuxième sens de déplacement, la porte définissant une lèvre dans la portion mobile, la lèvre se déformant pour assurer le passage ou le blocage du fluide.

Le clapet anti-retour est remarquable en ce que :
- la porte est dépourvue de section circulaire selon des plans de coupe perpendiculaires au premier sens de déplacement ;
- la porte définit deux charnières séparant la portion fixe et la lèvre mobile de la portion mobile, les deux charnières possédant un rayon de courbure inférieur au rayon de courbure de la lèvre mobile.

Avantageusement, la porte possède deux zones de renfort définissant une courbure opposée à la courbure de la lèvre mobile et des charnières, les deux zones de renfort séparant la portion mobile et la portion fixe.

Dans un mode de réalisation particulier, les deux charnières s'étendent au-delà de la lèvre mobile en direction de la deuxième extrémité.

Préférentiellement, les charnières s'étendent sur moins de la moitié de la longueur de la porte, la longueur étant mesurée selon le premier sens de déplacement.

Dans une réalisation particulière, la lèvre est prolongée par une queue en direction de la deuxième extrémité, la queue possédant une paroi de fond plate ou avec un rayon de courbure supérieur à 85% du rayon de courbure de la lèvre.

De manière avantageuse, la queue présente une largeur qui représente au moins 33% de la largeur interne de la canalisation sur au moins 50% de la longueur de la porte.

Il est intéressant de prévoir que les zones de renfort soient montées mobiles par rapport à la portion fixe.

Dans un mode de réalisation préférentiel, la porte possède une symétrie planaire. La deuxième extrémité de la porte se situe au-dessus d'un plan passant par les deux charnières et perpendiculaire au plan de symétrie, la portion mobile de la première extrémité se situant en dessous dudit plan.

Avantageusement, la porte possède une symétrie planaire. La deuxième extrémité de la porte se situe au-dessus d'un plan passant par les deux zones de renfort et perpendiculaire au plan de symétrie, la portion mobile de la première extrémité se situant en dessous dudit plan.

Dans un mode de réalisation particulier, la portion mobile s'étend sur une première longueur entre les deux charnières. La lèvre représente au moins 50% de la première longueur, la lèvre étant à rayon de courbure constant.

Avantageusement, le clapet anti-retour comporte un système de fixation à section circulaire pour se fixer à une paroi interne circulaire de la canalisation. La section circulaire et la partie mobile partagent le même centre.

De manière préférentielle, le clapet anti-retour comporte un raidisseur destiné à être fixé à un système de fixation du clapet anti-retour sur la canalisation, la portion fixe étant fixée au raidisseur et la portion mobile étant en contact avec le raidisseur pour bloquer le flux de fluide, le raidisseur étant annulaire.

Dans un mode de réalisation particulier, le raidisseur forme une marche et la lèvre possède une forme complémentaire recouvrant la marche.

Préférentiellement, la deuxième extrémité de la porte comporte deux trous traversants et le raidisseur comporte deux tiges, les deux tiges passant dans les deux trous traversants pour étirer la porte selon le premier sens de déplacement.

### Description des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :
- la figure 1 illustre schématiquement une vue en perspective d'un système de fixation monté sur un clapet anti-retour pour canalisation selon un premier mode de réalisation, le clapet anti-retour étant en position bloquante ;
- la figure 2 illustre schématiquement une vue arrière du système de fixation monté sur un clapet anti-retour pour canalisation selon le premier mode de réalisation, le clapet anti-retour étant en position bloquante ;
- la figure 3 illustre schématiquement une vue en perspective d'un système de fixation monté sur un clapet anti-retour pour canalisation selon le premier mode de réalisation monté dans une canalisation, le clapet anti-retour étant en position bloquante ;
- la figure 4 illustre schématiquement une vue en perspective d'un système de fixation monté sur un clapet anti-retour pour canalisation selon un deuxième mode de réalisation monté dans une canalisation, le clapet anti-retour étant en position bloquante ;
- la figure 5, illustre schématiquement une vue en coupe longitudinale du système de fixation monté sur un clapet anti-retour pour canalisation selon le premier mode de réalisation, le clapet anti-retour étant en position bloquante ;
- la figure 6 illustre schématiquement une vue en perspective d'un système de fixation monté sur un clapet anti-retour pour canalisation selon le premier mode de réalisation, le clapet anti-retour étant en position passante ;
- la figure 7 illustre schématiquement une vue arrière du système de fixation monté sur un clapet anti-retour pour canalisation selon le premier mode de réalisation, le clapet anti-retour étant en position passante ;
- la figure 8 illustre schématiquement une vue en perspective d'un système de fixation monté sur un clapet anti-retour pour canalisation selon le premier mode de réalisation monté dans une canalisation, le clapet anti-retour étant en position passante ;
- la figure 9 illustre schématiquement une vue en perspective d'un système de fixation monté sur un clapet anti-retour pour canalisation selon le deuxième mode de réalisation monté dans une canalisation, le clapet anti-retour étant en position passante ;
- la figure 10 illustre schématiquement une vue en coupe longitudinale du système de fixation monté sur un clapet anti-retour pour canalisation selon le premier mode de réalisation, le clapet anti-retour étant en position passante ;
- la figure 11 illustre schématiquement une vue éclatée du système de fixation monté sur un clapet anti-retour selon le premier mode de réalisation ;
- la figure 12 illustre schématiquement une vue de côté du système de fixation monté sur un clapet anti-retour pour canalisation selon le premier mode de réalisation, le clapet anti-retour étant en position bloquante.

### Description détaillée

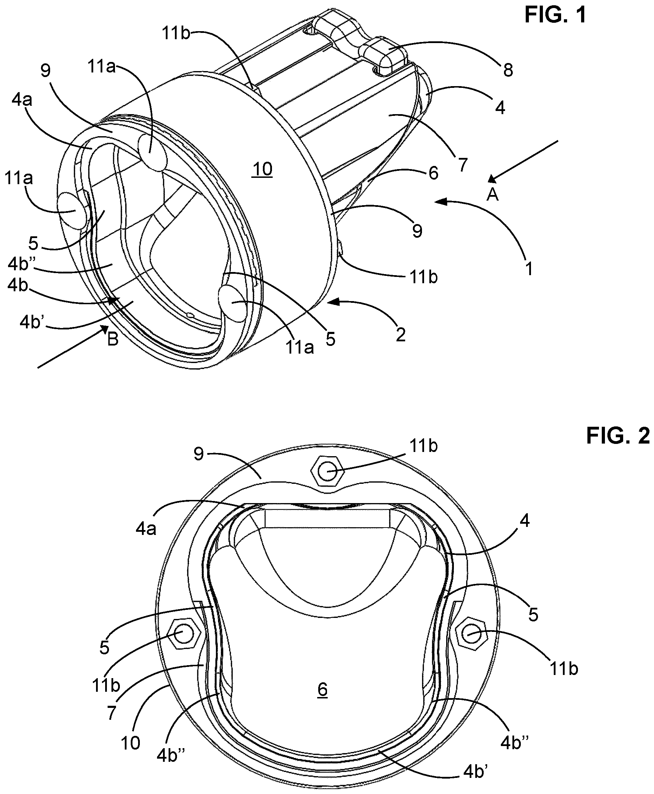

La figure 1 illustre un clapet anti-retour 1 muni d'un système de fixation 2 configuré pour se fixer à une paroi interne d'une canalisation 3. Le clapet anti-retour 1 est muni d'une membrane définissant une porte 4 qui est configurée pour autoriser le passage d'un fluide dans la canalisation 3 selon un premier sens de déplacement A. La porte 4 est configurée pour interdire le passage du fluide dans la canalisation 3 selon un deuxième sens de déplacement B qui est opposé au premier sens de déplacement A. De cette manière, la porte 4 n'autorise un flux de fluide que selon une seule direction à l'intérieur de la canalisation 3. Dans la position ouverte, le clapet anti-retour 1 autorise le flux de liquide depuis l'extrémité d'entrée jusqu'à l'extrémité de sortie, c'est-à-dire selon le premier sens de déplacement. Dans la position de repos, le clapet anti-retour 1 boque le flux de liquide.

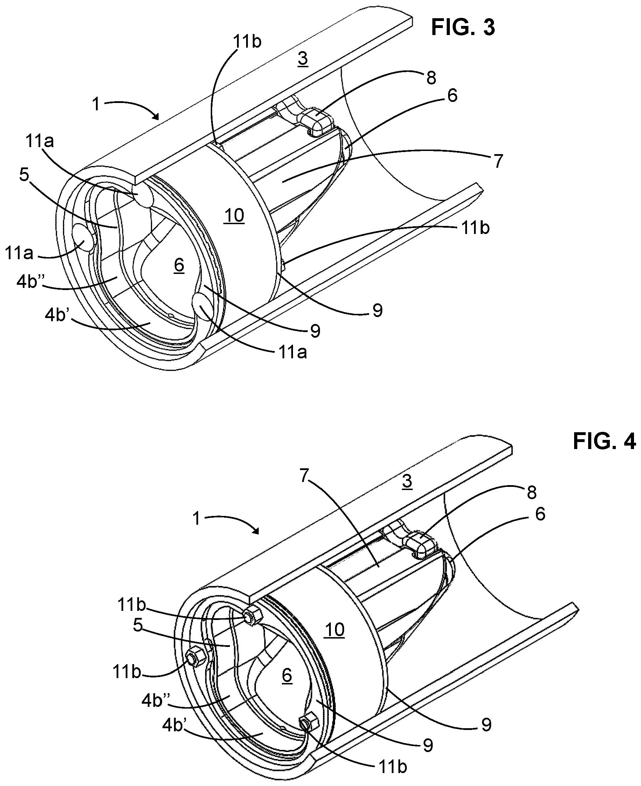

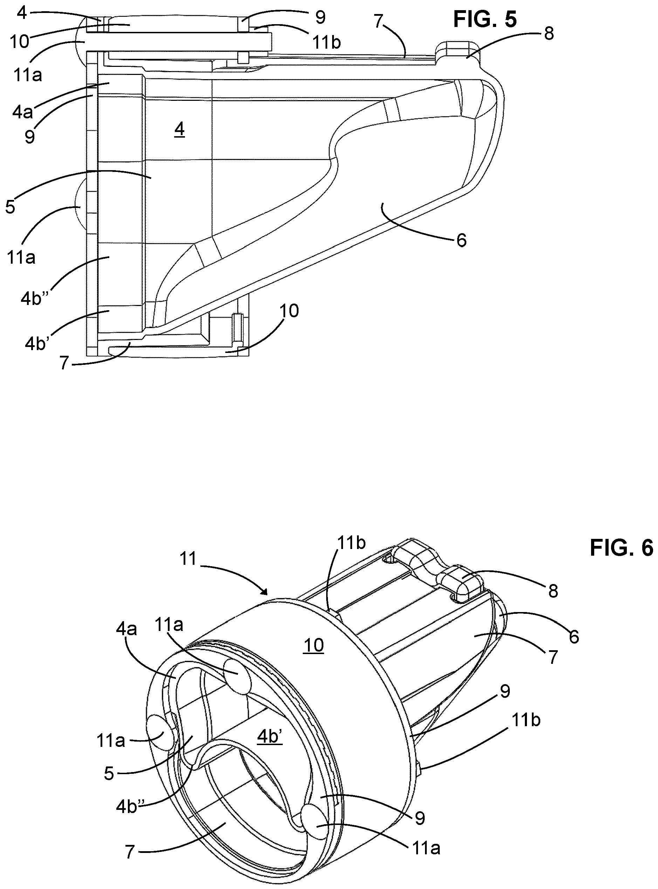

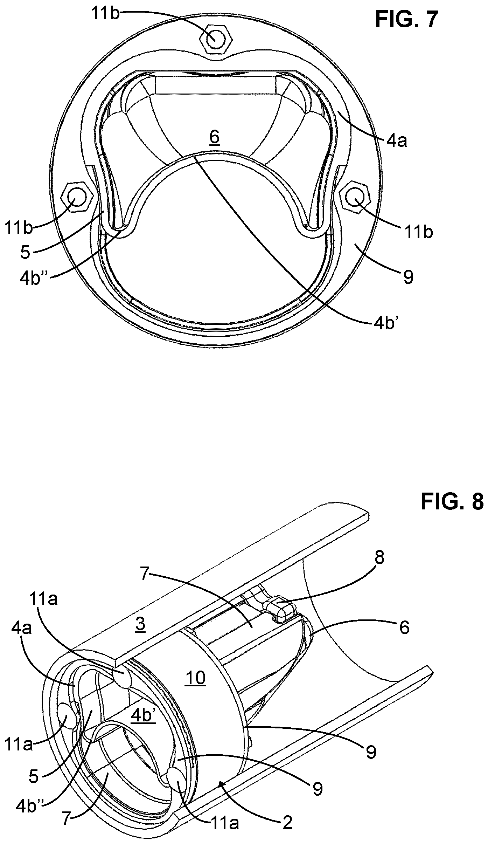

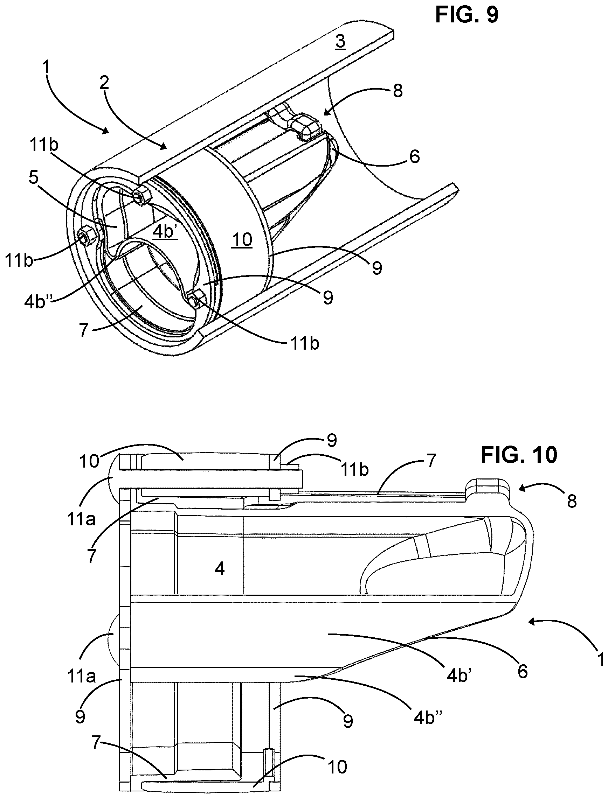

La porte 4 possède une zone d'entrée avec une portion fixe 4a et une portion mobile 4b. La portion mobile 4b est montée mobile par rapport à la portion fixe 4a. La portion mobile 4b se déforme de manière à définir une première position et une deuxième position. Dans la première position dite position bloquante et illustrée aux figures 1 à 5, la portion mobile 4b empêche le flux de fluide selon le deuxième sens de déplacement B. Dans la deuxième position dite position passante et illustrée aux figures 6 à 10, la portion mobile 4b est déformée ce qui autorise un flux de fluide selon le premier sens de déplacement A. La portion mobile 4b et la portion fixe 4a assurent l'étanchéité du clapet anti-retour 1. La zone d'entrée présente une section annulaire lorsqu'elle bloque le liquide. Comme illustré sur les différentes figures, la portion fixe 4a se trouve au-dessus de la portion mobile une fois installée dans une canalisation 3.

Les premier et deuxième sens de déplacement A et B correspondent à la direction longitudinale de la canalisation 3.

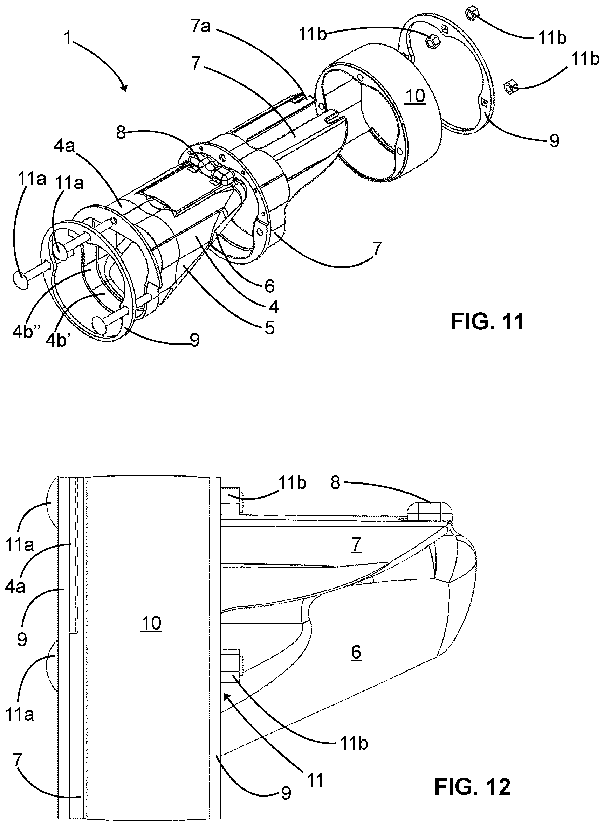

La porte 4 se présente sous la forme d'une structure tridimensionnelle qui possède une section décroissante depuis une première extrémité jusqu'à une deuxième extrémité. La deuxième extrémité est opposée à la première extrémité selon le deuxième sens de déplacement B. La porte 4 se présente sous la forme d'une structure conique et plus préférentiellement de forme tronconique comme cela est illustré aux figures 1 à 12. La première extrémité correspond à l'ouverture de la gueule du cône, c'est-à-dire l'entrée de la porte 4 alors que la deuxième extrémité correspond au fond du cône.

La structure conique ou tronconique est à section décroissante selon le deuxième sens de déplacement B. Lorsque le fluide se déplace dans la canalisation 3 selon le deuxième sens de déplacement B, le fluide s'introduit à l'intérieur de la porte 4, c'est-à-dire à l'intérieur du cône, ce qui a pour effet de générer une force sur la paroi interne de la membrane. Cette force appuie la paroi du cône en direction de la paroi latérale interne de la canalisation ou du système de fixation 2 ce qui rend plus difficile un passage de liquide à travers le clapet anti-retour 1.

Au contraire, lorsque le fluide se déplace selon le premier sens de déplacement A, il rencontre la paroi externe de la porte 4. Le fluide applique une force dirigée vers l'intérieur du cône et qui a pour effet de déformer l'entrée de la porte 4 et définir un passage pour le fluide. Le fluide exerce une force sur la portion mobile 4b qui se déforme pour générer un passage. Le fluide exerce une force qui déplace la portion mobile 4b en direction de la portion fixe 4a.

Il est particulièrement intéressant de fournir une porte 4 ayant une forme particulière de manière à assurer un blocage efficace du fluide lorsque ce dernier circule selon le deuxième sens de déplacement B et de présenter la capacité de se déformer facilement lorsque le fluide circule selon le premier sens de déplacement A. Plus la porte 4 se déforme facilement et plus la porte 4 peut laisser passer un débit faible de fluide ce qui empêche une stagnation du fluide. Cela réduit les pertes de charges générées par le clapet anti-retour 1.

L'utilisation d'un cône correspondant à sa définition mathématique, c'est-à-dire avec une pluralité de sections circulaires qui décroissent de manière linéaire n'offre pas un résultat satisfaisant. Le cône est en mesure de bloquer efficacement le flux de fluide selon le deuxième sens déplacement B, mais il est nécessaire d'appliquer un effort conséquent selon le premier sens de déplacement A pour obtenir une déformation suffisante du cône qui permet le passage d'un fluide à faible débit. En d'autres termes, le cône ne se déforme que si une hauteur suffisante de fluide est présente dans la canalisation 3.

De manière à améliorer la capacité à déformer la porte 4 pour de faibles débits de fluide selon le premier sens de déplacement A, c'est-à-dire à un faible débit, il est proposé de fournir une porte 4 qui est dépourvue de section circulaire selon des plans de coupe qui sont perpendiculaires au premier sens de déplacement A, c'est-à-dire à la direction longitudinale de la porte 4 et de la canalisation 3.

De manière préférentielle illustrée à la figure 2, la première extrémité de la porte 4 est formée avec une portion mobile 4b qui possède une lèvre 4b' et deux charnières 4b". La lèvre 4b' possède un rayon de courbure qui est supérieur aux rayons de courbure des deux charnières 4b". Les deux charnières 4b" sont séparées par la lèvre 4b' et chacune des charnières 4b" sépare la lèvre 4b' et la portion fixe 4a. Cette configuration permet de former une lèvre 4b' qui se déforme plus facilement lorsqu'une force est appliquée sur la paroi externe de la lèvre 4b' en direction de l'intérieur du cône. La lèvre 4b' se déforme entre une position de contact où la lèvre 4b' ferme la porte 4 et une position déformée où la lèvre 4b' définit un canal pour le passage d'un fluide. Les documents WO 2020/154801, WO 2018/006949 et US 2011 /013474 divulguent des configurations où les charnières sont formées dans le prolongement de la lèvre mobile avec le même rayon de courbure qui impose d'avoir une pression de liquide importante pour déformer la lèvre.

Il est également intéressant de prévoir que la zone d'entrée de la porte 4 définisse deux renforts 5 qui séparent la portion fixe 4a et la portion mobile 4b. Les deux renforts 5 forment un rétrécissement de la largeur de l'entrée de la porte 4. La largeur est mesurée selon une direction longitudinale perpendiculaire à l'axe de la canalisation 3 lorsque le clapet anti-retour 1 est monté dans la canalisation 3. De manière préférentielle, chaque renfort 5 définit une inflexion du rayon de courbure de l'entrée de la porte 4. Préférentiellement, chacun des renforts 5 définit une inversion de courbure par rapport à la courbure qui est présente dans la portion mobile 4b. Les zones de renfort 5 séparent la portion fixe 4a et la portion mobile 4b. Selon les configurations, les zones de renfort 5 sont montées fixes ou mobiles par rapport au système de fixation 2.

En changeant l'orientation du rayon de courbure, les zones de renfort 5 sont en mesure de concentrer les efforts du liquide sur la portion mobile 4b pour faciliter la déformation de la portion mobile 4b à faible débit.

De manière avantageuse, le rayon de courbure des zones de renfort 5 possède une valeur qui est supérieure à la valeur du rayon de courbure des charnières 4b" en valeur absolue.

Lorsque la canalisation 3 est à section circulaire, il est avantageux d'utiliser un système de fixation 2 qui est également à section externe circulaire. Préférentiellement, le centre de la section externe circulaire correspond au centre du rayon de courbure de la lèvre 4b'.

Avantageusement, la portion mobile 4b s'étend depuis l'entrée, c'est-à-dire la première extrémité, en direction de la deuxième extrémité en conservant la lèvre 4b', les charnières 4b" et les renforts 5 sur moins de 30% de la longueur de la porte 4, de préférence moins de 20% de la longueur de la porte 4. Le rayon de courbure peut être maintenu constant sur toute la longueur de la portion mobile 4b, mais il est également possible de prévoir une diminution du rayon de courbure tant que ce dernier reste inférieur à celui des charnières 4b".

Afin de faciliter l'ouverture de la porte 4 à un faible débit appliqué sur la paroi externe de la portion mobile 4b, il est avantageux que la portion mobile 4b possède un rayon de courbure constant sur au moins 5% de préférence au moins 10% de la longueur de la porte 4. La longueur est mesurée sur le périmètre de la membrane. Le maintien du rayon de courbure permet de réduire l'effort à appliquer pour déformer la partie mobile 4b et former le canal qui permet un passage du fluide selon le premier sens de déplacement A.

Dans un mode de réalisation particulier, la partie mobile 4b est réalisée en matériau polymère, de préférence en élastomère. Avantageusement, la porte 4 est intégralement réalisée dans un matériau polymère, par exemple en élastomère. La partie mobile 4b se déforme de manière élastique entre sa première position et sa deuxième position. Selon les configurations, l'épaisseur du matériau formant la portion fixe 4a peut-être supérieure ou égale à l'épaisseur du matériau formant la portion mobile 4b. Il est également possible de prévoir que l'épaisseur du matériau formant les deux charnières 4b" soit supérieure ou égale à l'épaisseur de la lèvre 4b'. Il est encore possible de prévoir que l'épaisseur du matériau formant la portion fixe 4a soit supérieure ou égale à l'épaisseur du matériau formant les deux zones de renfort 5.

Afin de faciliter l'ouverture de la porte 4 lorsque de faibles débits sont appliqués sur la paroi externe de la porte, il est avantageux de prolonger la lèvre 4b avec une queue 6 qui s'étend sur au moins 30% de la longueur de la porte 4. La queue 6 n'intervient pas dans l'étanchéité du clapet anti-retour 1, c'est-à-dire que la queue 6 n'est pas en contact avec la canalisation 3 ou le système de fixation 2 ou tout autre élément qui intervient dans l'étanchéité de la position bloquante. La queue 6 peut se présenter sous la forme d'une portion plate ou légèrement arrondie. Par légèrement arrondie, on entend un rayon de courbure qui est supérieur ou égal au rayon de courbure de la lèvre 4b'. Le rayon de courbure de la queue 6 est orienté dans le même sens que la lèvre 4b'. Il est également possible d'avoir une queue 6 avec un rayon de courbure qui est supérieur à 85% du rayon de courbure de la lèvre 4b'. De manière préférentielle, la longueur de la queue 6 représente au moins 60% de la longueur totale de la porte 4, c'est-à-dire la somme de la longueur de la zone d'entrée et de la queue 6. Si le système de fixation 2 prend uniquement appui sur la paroi interne de la canalisation 3, la largeur de la queue 6 correspond à 30% de la largeur du système de fixation 2. Si le système de fixation 2 prend uniquement appui sur la paroi externe de la canalisation 3, la largeur de la queue 6 correspond à 30% de la zone d'appui sur la paroi externe avec retrait de l'épaisseur de la canalisation 3. De préférence, la largeur de la queue 6 est au moins égale à 50% de la largeur interne de la canalisation 3. De manière préférentielle, la porte 4 et la queue 6 font partie d'un élément monobloc qui forme la membrane. La queue 6 est préférentiellement dépourvue des renforts 5. Préférentiellement, la paroi externe de la queue 6 n'est pas en contact avec une autre paroi pour assurer l'étanchéité de la porte dans la position bloquante.

La section de la porte 4 diminue au fur et à mesure que l'on se rapproche de la deuxième extrémité. La paroi externe inférieure de la queue 6 s'éloigne de la paroi interne inférieure de la canalisation 3, c'est-à-dire, se rapproche de la paroi interne supérieure de la canalisation 3 au fur et à mesure que l'on se rapproche de la deuxième extrémité. En d'autres termes, la paroi inférieure de la queue est inclinée vers le haut depuis l'entrée vers le fond. Cela permet de limiter la perte de charge lorsque le fluide doit circuler dans la canalisation 3.

Lorsque le clapet anti-retour 1 est monté dans une canalisation 3 et est destiné à bloquer ou laisser passer un liquide, la partie inférieure de la porte 4 est formée par la lèvre 4b' alors que la partie supérieure de la porte 4 est formée par la portion fixe 4a. De manière préférentielle, la portion fixe 4a de l'entrée est prolongée par une portion fixe de la queue 6 qui s'étend selon la direction longitudinale de la canalisation 3 de sorte que la partie supérieure de la porte 4 reste à distance constante de la partie supérieure de la canalisation 3 ou dévie moins que la partie inférieure de la queue 6. Au contraire, la partie inférieure de la queue 6 est orientée de manière à se rapprocher de la partie supérieure de la canalisation 3 lorsque que l'on se déplace de la première extrémité jusqu'à la deuxième extrémité. La paroi inférieure de la queue 6 présente une inclinaison qui permet d'atteindre au moins le centre de la canalisation 3 et de préférence au moins le tiers supérieur de la canalisation 3. Selon les configurations, la forme de la canalisation 3 correspond sensiblement ou exactement à la forme de la surface de fixation du système de fixation 2.

Dans un mode de réalisation particulier, la charnière 4b" s'étend sur une longueur qui est supérieure à la longueur de la lèvre 4b' et s'étend dans la queue 6. De manière préférentielle, la charnière 4b" s'étend jusqu'à la paroi de fond de la queue 6. La charnière 4b" s'étend préférentiellement selon une direction longitudinale ou selon une inclinaison qui est moins importante que l'inclinaison de la paroi de fond de la queue 6. Ce mode de réalisation est particulièrement avantageux lorsque la charnière 4b" s'étend sur une longueur inférieure à 20% de la direction longitudinale de la canalisation, c'est-à-dire selon la longueur de la porte 4 et lorsque la zone de renfort 5 s'étend au-delà de la charnière 4b". Les bords de la queue 6 sont incurvés de manière à refermer la porte 4 et définir un élément sensiblement conique ou tronconique. De manière préférentielle, la queue 6 définit une section dont le rapport largeur sur hauteur (l/h) diminue au fur et à mesure que l'on se rapproche du fond de la porte 4.

Dans un mode de réalisation préférentiel, le clapet anti-retour 1 possède un raidisseur 7 qui est configuré pour rigidifier une ou plusieurs portions de la porte 4. Il est avantageux de fixer la portion supérieure de la queue 6 à la canalisation 3 et/ou au système de fixation au moyen du raidisseur 7. Le raidisseur 7 permet d'éviter que le fond de la porte 4 se déforme en direction de la partie inférieure de la canalisation 3 et obture en partie la canalisation 3. L'utilisation d'un raidisseur 7 permet de faciliter la formation de la membrane, par exemple dans un seul matériau et avantageusement avec une épaisseur qui est plus homogène entre les différentes portions.

De manière préférentielle, le raidisseur 7 réalise l'interface entre le système de fixation 2 et la membrane. Le raidisseur 7 peut intervenir dans l'étanchéité du système de fixation 2. Dans le mode de réalisation illustré, le raidisseur 7 possède une portion annulaire qui entoure la zone d'entrée de la porte. La portion fixe 4a est fixée au raidisseur 7 qui est lui-même fixé au système de fixation 2. La lèvre 4b' vient en appui sur la paroi interne du raidisseur 7 pour réaliser l'étanchéité dans la position bloquante.

Le clapet anti-retour 1 peut être dépourvu du système de fixation 2. Il est alors avantageux d'utiliser un raidisseur 7 qui réalise la fixation du clapet anti-retour 1 sur le système de fixation 2 ou de tout au moyen qui se fixe sur un système de fixation 2.

Le clapet anti-retour 1 possède un système de fixation 2 qui est configuré pour monter fixement la portion fixe 4a sur la canalisation 3. Dans le mode de réalisation illustré, le système de fixation 2 est configuré pour monter fixement la portion fixe 4a sur la paroi interne de la canalisation 3, mais un autre moyen de fixation peut être utilisé.

Il est particulièrement avantageux de prévoir un mode de réalisation dans lequel le rayon de courbure de chacune des deux zones de renfort 5 est plus important que le rayon de courbure de la portion mobile 4b. Pour rappel, le rayon de courbure des deux zones de renfort 5 est de sens opposé au rayon de courbure de la lèvre 4b' et des charnières 4b". Une telle configuration permet de former simplement deux zones de renfort 5 qui vont faciliter la déformation de la portion mobile 4b et ainsi faciliter la formation d'un canal autorisant le passage d'un fluide selon le premier sens de déplacement A lorsque le fluide applique un effort sur la paroi externe de la portion mobile 4b.

De manière préférentielle, la portion fixe 4a définit une zone avec une inversion de courbure de sa paroi latérale et cette inversion de courbure est disposée à équidistance des deux charnières 4b" et/ou à équidistance des deux zones de renfort 5. L'inversion de courbure est utilisée pour rigidifier la portion fixe 4 et ainsi éviter que les charnières 4b" utilisent une partie de la force appliquée par le fluide pour déformer la portion fixe 4a. Dans le mode de réalisation avantageux illustré, l'inversion de courbure de la portion fixe 4a est disposée en vis-à-vis de la portion mobile 4b selon le plan de la médiatrice des deux charnières 4b".

Dans un mode de réalisation avantageux, la portion mobile 4b et les deux charnières 4b" s'étendent sur moins de 20% de la longueur de la porte 4, la longueur étant mesurée selon le premier sens de déplacement.

Il est particulièrement avantageux que la portion mobile 4b de la zone d'entrée qui assure l'étanchéité ne s'étende pas sur une longueur supérieure à 30 % de la longueur de la porte 4 car cela a pour effet de diminuer la longueur de la queue 6 et donc de diminuer la surface efficace de la paroi externe de la porte 4 qui reçoit un effort du fluide circulant selon le premier sens de déplacement, c'est-à-dire la face inférieure de la queue 6. En utilisant une queue 6 qui possède au moins 50% de la longueur de la membrane Plus la longueur de la queue 6 est importante et plus la membrane est apte à se déformer en présence d'un faible débit. L'effort appliqué par le fluide sur la paroi externe de la queue 6 est appliqué sur une surface importante ce qui génère une force conséquente visant à déformer la portion mobile 4. L'homme du métier adaptera l'inclinaison de la paroi externe de la queue pour définir le débit à partir de laquelle la portion mobile 4b se déforme.

Il est également avantageux de ne pas avoir des zones de renfort 5 qui s'étendent sur toute la longueur de la porte 4 car cela implique d'avoir des zones de renfort 5 avec une orientation qui évolue suivant la profondeur dans la porte 4 ce qui rend plus difficile l'obtention d'une paroi mobile déformable avec un faible flux de fluide.

Il est particulièrement avantageux que les zones de renfort s'étendent sur une longueur qui représente moins de 80 % de la longueur de la porte 4, de préférence moins de 30%, de préférence au moins 5%.

Afin de faciliter le fonctionnement de la porte 4 et plus particulièrement de la portion mobile 4b, il est particulièrement avantageux de prévoir une porte 4 qui possède une symétrie planaire, c'est-à-dire un plan symétrie. Il est également particulièrement avantageux que la deuxième extrémité de la porte 4 se situe au-dessus d'un plan de séparation passant par les deux zones de renfort 5 et perpendiculaires au plan de symétrie. Pour sa part, la portion mobile 4b qui se situe dans la première extrémité se trouve en dessous du plan de séparation.

Dans l'exemple illustré, le clapet anti-retour 1 est un clapet anti-retour destiné à bloquer un liquide. La partie fixe 4a de la zone d'entrée et la portion finale de la deuxième extrémité se trouvent dans la partie haute du clapet anti-retour 1 alors que la partie mobile 4b présente à la première extrémité se trouve dans la partie basse du clapet anti-retour 1. Le plan de séparation est un plan horizontal ou sensiblement horizontal qui est défini par les deux zones de renfort 5.

En dessous du plan de séparation, un effort appliqué sur la paroi externe de la queue 6 a pour effet d'appliquer une force qui vise à déformer la portion mobile 4b. Les deux charnières 4b" facilitent la déformation de la lèvre 4b' pour autoriser le passage du fluide. Un effort appliqué sur la paroi externe de la queue 6 au-dessus du plan de séparation cherche également à déformer la porte 4 pour faciliter le passage du flux de liquide. Cependant, lorsque le fluide arrive à atteindre une paroi externe qui se situe au-dessus du plan de séparation, la force totale appliquée par le fluide est suffisante pour entraîner une déformation importante de la porte et ainsi obtenir l'information d'un passage important pour le fluide. Dans ce cas de figure, le fluide est en mesure d'appliquer une force importante pour déformer la porte 4 et il est préférable que l'encombrement du clapet anti-retour 1 dans la partie basse de la canalisation 3 soit la plus faible possible.

Il est particulièrement avantageux de décentrer la porte 4 par rapport à la canalisation 3 de sorte que l'inclinaison de la paroi de fond de la queue 6 soit plus importante que l'inclinaison de la partie fixe de la porte 4, c'est-à-dire la partie haute de la membrane. Dans les modes de réalisation illustrés, il apparaît que la partie supérieure de la porte 4 reste sensiblement à la même distance de la partie haute de la canalisation 3 alors que la partie basse de la porte 4 se rapproche de la partie haute de la canalisation 3 lorsque l'on se déplace de la première extrémité jusqu'à la deuxième extrémité.

Cette particularité permet, lorsqu'un débit important circule dans la canalisation 3 selon le premier sens de déplacement A, de permettre la déformation de la portion mobile 4a tout en n'interdisant pas ou en réduisant la génération d'une force appliquée sur la partie haute de la paroi externe de la porte 4 qui aurait tendance à déformer la porte vers le bas ce qui tend à obstruer la section de la canalisation 3 et ainsi limiter le flux de fluide.

Il est particulièrement avantageux d'avoir une partie haute du clapet anti-retour 1 et plus particulièrement de la porte 4 qui se trouve au-delà de la section horizontale médiane de la canalisation est encore plus préférentiellement dans les 25 % les plus hauts de la canalisation selon une direction verticale.

Dans le mode de réalisation illustré sur les différentes figures, la lèvre 4b' forme une marche. La marche vient en appui sur une forme complémentaire du système de fixation ou du raidisseur 7 ce qui permet d'assurer une bonne étanchéité de la lèvre 4b'.

Dans un mode de réalisation préférentiel, la lèvre 4b vient en contact direct du système de fixation 2 et encore plus préférentiellement du raidisseur 7 fixé au système de fixation 2. Le liquide qui circule selon le premier sens de déplacement A vient en appui sur la queue 6. La force appliquée sur la queue 6 déforme la queue 6 qui se creuse. Au fur et à mesure que l'intensité de la force augmente, le creux progresse en direction de la première extrémité. Une fois une force seuil atteinte, la lèvre 4b' bascule de la position fermée à la position ouverte et définit un canal qui permet la circulation du liquide. Le rayon de courbure de la queue 6 étant important, la surface de contact avec le liquide est importante ce qui génère une force de plus grande intensité que les configurations de l'art antérieur. Il est alors possible d'avoir l'ouverture de la porte avec un débit plus faible de fluide. De manière préférentielle, la queue 6 présente une inclinaison constante selon un plan de coupe vertical lorsque le clapet anti-retour 1 est installé. Il est avantageux que la queue 6 présente une largeur qui représente au moins 33% de la largeur interne de la canalisation 3 sur au moins 50% de la longueur de la porte 4 pour que le fluide applique une force importante sur la queue 6. Préférentiellement, la largeur est au moins égale à 50% voire 66% de la largeur interne de la canalisation 3. La largeur est mesurée selon une direction horizontale et peut correspondre à un diamètre pour une section circulaire.

Il est également particulièrement avantageux de prévoir que le clapet anti-retour 1 soit muni d'un raidisseur 7 qui est fixé au système de fixation 2 et qui est également fixé à la porte 4 et plus particulièrement à la portion fixe 4a de la porte 4. Le raidisseur 7 est configuré pour présenter une plus grande rigidité que la portion fixe 4a de la porte 4 et ainsi éviter que la deuxième extrémité tombe sous l'effet de son poids lorsque la porte 4 est uniquement fixée au moyen de sa première extrémité.

Selon les configurations, le raidisseur 7 peut être réalisé en matériaux métalliques, en bois ou en matériaux plastiques ou dans tout autre matériau qui permet de supporter les contraintes mécaniques appliquées par le poids de la porte 4. Il est particulièrement avantageux de réaliser le raidisseur 7 en matériaux plastiques.

Dans une configuration préférentielle, la deuxième extrémité de la porte 4 définit un ou plusieurs trous traversants 8 qui s'étendent selon le premier sens de déplacement A. Dans l'exemple de réalisation illustré, la deuxième extrémité de la porte 4 définit deux trous traversants 8. Il est avantageux que le raidisseur 7 possède deux tiges terminales 7a. Les deux tiges 7a passent à travers les deux trous traversants 8 de manière à supporter la deuxième extrémité de la porte 4. Il est également avantageux que les deux tiges 7a appliquent un effort de traction sur les deux trous traversants 8 et la première extrémité de manière à étirer la porte 4 selon le premier sens de déplacement A ce qui facilite le maintien de sa forme dans le temps. L'effort de traction appliqué par les deux tiges 7a permet de réduire la déformation de la porte 4 ce qui facilite l'obtention d'une bonne étanchéité lorsque le fluide circule dans le deuxième sens de déplacement B.

Dans un mode de réalisation avantageux, le système de fixation 2 est à section circulaire pour se fixer à une canalisation 3 dont la paroi interne définit également une section circulaire. Il est particulièrement avantageux que la section circulaire définie par le système de fixation 2 partage le même centre que le rayon de courbure de la portion mobile 4b de la porte 4 et préférentiellement de la lèvre 4b'. Dans cette configuration particulière, l'effort appliqué par le fluide qui est en appui sur la paroi interne de la canalisation 3 et sur la paroi externe de la porte 4, préférentiellement sur la portion mobile 4b et encore plus préférentiellement sur la queue 6 génère un effort radial sur la portion mobile 4a ce qui facilite la déformation de la lèvre 4b'.

De manière avantageuse, la portion mobile 4b de la porte 4 se présente sous la forme d'une lèvre 4b' qui vient se plaquer contre le système de fixation 2, contre le raidisseur 7 ou contre la paroi interne de la canalisation 3. Lorsqu'un flux de liquide entre dans la porte 4 selon le deuxième sens de déplacement B, le poids du liquide appuie sur la lèvre 4b' ce qui augmente l'étanchéité du clapet anti-retour 1.

Dans un mode de réalisation particulier, le système de fixation 2 est configuré pour se fixer à la paroi interne d'une canalisation 3 c'est-à-dire à prendre appui uniquement sur la paroi interne de la canalisation 3. De manière encore plus avantageuse, le système de fixation 2 est étanche.

Dans un mode de réalisation particulier, le système de fixation 2 comporte une première armature 9 qui définit une première forme externe ainsi qu'une deuxième armature 9 qui définit une deuxième forme externe. De manière privilégiée, la première forme externe est identique à la deuxième forme externe.

Le système de fixation 2 comporte également un anneau 10 qui est réalisé en matériau polymère déformable. L'anneau 10 sépare la première armature 9 et la deuxième armature 9 selon le sens d'écoulement du fluide à l'intérieur de la canalisation 3.

Le système de fixation 2 comporte un système de compression 11 qui relie la première armature 9 et la deuxième armature 9. Le système de compression 11 est configuré pour définir la distance qui sépare la première armature 9 et la deuxième armature 9. Le système de compression 11 est configuré pour comprimer l'anneau 10 entre la première armature 9 et la deuxième armature 9. Selon les configurations, la première armature 9 peut être en contact direct avec l'anneau 10 où elle peut être séparée de ce dernier par un élément intermédiaire par exemple le raidisseur 7 ou un élément de fixation de la membrane avec le système de fixation 2. Il est également possible de prévoir que la deuxième armature 9 soit en contact direct avec l'anneau 10 ou qu'elle soit séparée de ce dernier par un élément intermédiaire par exemple le raidisseur 7 ou un élément de fixation de la membrane avec le système de fixation 2.

Plus la première armature 9 et la deuxième armature 9 sont proches l'une de l'autre et plus l'anneau 10 est comprimé et il se déforme pour appuyer contre la paroi interne de la canalisation 3. L'effort appliqué par l'anneau 10 sur la paroi interne de la canalisation 3 permet de fixer le système de fixation 2 sur la canalisation 3. Il a été observé que la déformation de l'anneau 10 induit une force de fixation qui est suffisante pour obtenir une fixation importante d'un dispositif de fonctionnalisation de la canalisation 3, par exemple un clapet-anti-retour 1.

L'application d'un effort de compression sur l'anneau 10 au moyen de la première armature 9 et de la deuxième armature 9 a pour effet que l'anneau 10 déborde au-delà de la première forme externe et de la deuxième forme externe et vient prendre appui sur la paroi interne de la canalisation 3. Les figures 5, 10 et 12 illustrent un anneau qui est bombé avec une portion centrale qui est plus proche de la paroi interne de la canalisation 3 que les extrémités de l'anneau 10 selon la direction longitudinale de la canalisation 3. Cette configuration est plus avantageuse que la configuration opposée où les extrémités sont plus proches de la paroi interne que la portion centrale de l'anneau 10.

Dans un mode de réalisation particulier, la face externe de l'anneau 10 s'étend de manière rectiligne entre la première forme externe et la deuxième forme externe en l'absence de sollicitation mécanique. Il est particulièrement avantageux que la première forme externe soit identique à la deuxième forme externe. De manière avantageuse, en l'absence de sollicitation par la première armature 9 et la deuxième armature 9, l'anneau 10 déborde de la première forme externe et de la deuxième forme externe. La compression de l'anneau 10 par les deux armatures 9 vient accentuer le bombé de l'anneau 10. Les deux armatures 9 sont réalisées préférentiellement en métal pour former des armatures rigides et faciliter la déformation de l'anneau 10.

Préférentiellement, le système de compression 11 passe à travers l'anneau 10 ce qui facilite la solidarisation du système de compression 11 et de l'anneau 10 pour former un système de fixation 2 qui est étanche.

De manière avantageuse, la première armature 9 et la deuxième armature 9 sont toutes les deux des armatures annulaires c'est-à-dire des armatures qui définissent un trou traversant. Il est alors possible de former un système de fixation qui peut être traversé par un fluide. Ce mode de réalisation est utilisé pour fixer un clapet anti-retour 1 qui est illustré dans les figures 1 à 12. En alternative, la première armature 9 et/ou la deuxième armature 9 sont étanches. Le système de fixation 2 forme alors un obturateur de canalisation.

Le système de fixation 2 est particulièrement avantageux car il prend appui sur la paroi interne de la canalisation 3 ce qui permet une installation compacte. Il est avantageux d'utiliser un système de compression qui utilise une ou plusieurs vis 11a et un ou plusieurs écrous 11b correspondants. Dans une configuration, la vis 11a est montée fixement à la première armature 9 ou à la deuxième armature 9 et l'écrou 11b est monté rotatif de manière à régler la force de compression appliquée sur l'anneau 10. Dans une autre configuration, l'écrou 11b est monté fixement à la première armature 9 ou à la deuxième armature 9 et la vis 11a est montée rotative de manière à régler la force de compression appliquée sur l'anneau 10. Ces modes de réalisation sont simples car ils permettent de régler la force de compression lorsque l'on a accès à une seule extrémité de la canalisation 3.

Le système de fixation 2 peut être entièrement démontable et il est possible d'intervertir les deux armatures 9 et les vis 11a et les écrous 11b pour s'adapter à la configuration de la canalisation 3.

Les figures illustrent l'installation du système de fixation 2 sur un clapet anti-retour 1, mais un tel système de fixation 2 peut être utilisé sur d'autres dispositifs de fonctionnalisation d'une canalisation 3. Il est possible de remplacer le clapet anti-retour à membrane par un clapet anti-retour à bandes ou par un clapet anti-retour selon une autre technologie. Il est également possible de remplacer le clapet anti-retour par un autre dispositif, par exemple un réducteur de section, un obturateur ou un dispositif de suivi des flux dans la canalisation.

Lorsque le système de fixation 2 est destiné à fixer un dispositif qui autorise le passage d'un liquide, il est avantageux que l'épaisseur de l'anneau 10 dans sa portion inférieure soit inférieure à l'épaisseur de matériau dans la partie supérieure. Cela permet de limiter la hauteur de la marche à franchir par le liquide à très faible débit. Cela permet d'éviter qu'une trop grande quantité de liquide stagne devant le système de fixation 2. De manière préférentielle, le système de compression 11 comprime la partie la plus épaisse de l'anneau 10 de manière à mieux maitriser la déformation de l'anneau 10. Il est particulièrement avantageux que la forme interne d'une ou des deux armatures 9 reproduise la forme de l'anneau 10 de manière à mieux répartir la force de compression sur l'épaisseur de l'anneau 10. Il est également avantageux de faire passer le système de compression 11 à travers l'anneau 10 pour orienter l'anneau 10 et les armatures 9 de la même manière.

De manière à mieux maitriser la déformation de l'anneau 10, il est avantageux de prévoir un raidisseur 7 dont la paroi externe vient en appui sur la paroi interne de l'anneau 10. Le raidisseur 7 est monté fixement à l'une des armatures 9 et il est monté mobile par rapport à l'autre des armatures 9. De cette manière, lorsque le système de compression 11 déplace les armatures 9 l'une par rapport à l'autre, l'anneau 10 se comprime et il est bloqué par le raidisseur 7 qui limite la déformation de l'anneau 10 vers l'intérieur. Préférentiellement, la paroi externe du raidisseur 7 possède une forme complémentaire de la forme de la paroi interne de l'anneau 10. L'utilisation d'un raidisseur 7 permet d'utiliser un anneau 10 d'épaisseur réduite ce qui limite la quantité d'eau stagnante dans le fond de la canalisation lorsque le système de fixation 2 est associé à un dispositif traversant.

Dans un mode de réalisation particulier, la première extrémité de la porte 4 possède une forme complémentaire à la première extrémité du raidisseur 7. La portion fixe 4a de la porte 4 est coincée entre les deux armatures 9 au moyen de l'anneau 10.

Il est particulièrement avantageux d'avoir un anneau 10 dont la longueur est au moins égale à 20% du diamètre de la canalisation 3 ce qui correspond au diamètre externe du système de fixation 2, c'est-à-dire que l'anneau 10 est destiné à être en contact avec la paroi interne de la canalisation 3 sur une longueur qui est au moins égale à 20% du diamètre interne de la canalisation 3..

De manière préférentielle, l'anneau 10 est réalisé dans un matériau polymère ayant une dureté comprise entre 20 et 80 shore, de préférence entre 30 et 70 shore.

## Revendications

1. Clapet anti-retour (1) pour canalisation (3) comportant :
- une porte (4) de forme sensiblement conique configurée pour autoriser le passage d'un fluide dans une canalisation (3) selon un premier sens de déplacement (A) et pour interdire le passage du fluide dans la canalisation (3) selon un deuxième sens de déplacement (B) opposé au premier sens de déplacement (A), la porte (4) possédant une première extrémité avec une portion fixe (4a) et une portion mobile (4b), la portion mobile (4b) étant mobile par rapport à la portion fixe (4a) par déformation de la portion mobile (4b) entre une position autorisant le passage du fluide et une position interdisant le passage du fluide, la porte (4) étant à section décroissante depuis la première extrémité jusqu'à une deuxième extrémité selon le deuxième sens de déplacement (B), la porte (4) définissant une lèvre (4b') dans la portion mobile (4b), la lèvre (4b') se déformant pour assurer le passage ou le blocage du fluide, la porte (4) possédant une première extrémité à section annulaire lorsque la porte (4) est dans la position interdisant le passage du fluide ;
- la première extrémité de la porte (4) définit deux charnières (4b") séparant la portion fixe (4a) et la lèvre mobile (4b') de la portion mobile (4b) ;
- la porte (4) est à section décroissante depuis la première extrémité jusqu'à la deuxième extrémité opposée selon le deuxième sens de déplacement (B), la première extrémité définissant la lèvre (4b') et les deux charnières (4b"), la lèvre (4b') s'étendant en direction de la deuxième extrémité ;
le clapet anti-retour (1) étant **caractérisé en ce que** :
- la porte (4) est dépourvue de section circulaire selon des plans de coupe perpendiculaires au premier sens de déplacement (A) dans la position interdisant le passage du fluide, à la deuxième extrémité ;
- les deux charnières (4b") possèdent un rayon de courbure inférieur au rayon de courbure de la lèvre mobile (4b') dans la position interdisant le passage du fluide.

2. Clapet anti-retour (1) selon la revendication 1 dans lequel la porte (4) possède deux zones de renfort (5) définissant une courbure opposée à la courbure de la lèvre mobile (4b') et des charnières (4b"), les deux zones de renfort (5) séparant la portion mobile (4b) et la portion fixe (4a).

3. Clapet anti-retour (1) selon l'une des revendications 1 et 2 dans lequel les deux charnières (4b") s'étendent au-delà de la lèvre mobile (4b') en direction de la deuxième extrémité.

4. Clapet anti-retour (1) selon l'une quelconque des revendications 1 à 3 dans lequel les charnières (4b") s'étendent sur moins de la moitié de la longueur de la porte (4), la longueur étant mesurée selon la direction longitudinale de la canalisation.

5. Clapet anti-retour (1) selon l'une quelconque des revendications précédentes dans lequel la lèvre (4b') est prolongée par une queue (6) en direction de la deuxième extrémité, la queue (6) possédant une paroi de fond plate ou avec un rayon de courbure supérieur à 85% du rayon de courbure de la lèvre (4b').

6. Clapet anti-retour (1) selon la revendication précédente dans lequel la queue (6) présente une largeur qui représente au moins 33% de la largeur interne de la canalisation (3) sur au moins 50% de la longueur de la porte (4).

7. Clapet anti-retour (1) selon l'une quelconque des revendications 2 à 6 dans lequel les zones de renfort (5) sont montées mobiles par rapport à la portion fixe (4a).

8. Clapet anti-retour (1) selon l'une quelconque des revendications précédentes dans lequel la porte (4) possède une symétrie planaire et dans lequel la deuxième extrémité de la porte (4) se situe au-dessus d'un plan passant par les deux charnières (4b") et perpendiculaire au plan de symétrie, la portion mobile (4b) de la première extrémité se situant en dessous dudit plan.

9. Clapet anti-retour (1) selon l'une quelconque des revendications 2 à 7 dans lequel la porte (4) possède une symétrie planaire et dans lequel la deuxième extrémité de la porte (4) se situe au-dessus d'un plan passant par les deux zones de renfort (5) et perpendiculaire au plan de symétrie, la portion mobile de la première extrémité se situant en dessous dudit plan.

10. Clapet anti-retour (1) selon l'une quelconque des revendications précédentes dans lequel la portion mobile (4b) s'étend sur une première longueur entre les deux charnières (4b") selon la direction longitudinale de la canalisation et dans lequel la lèvre (4b') représente au moins 50% de la première longueur selon la direction longitudinale de la canalisation, la lèvre (4b') étant à rayon de courbure constant selon un plan de coupe perpendiculaire à la direction longitudinale de la canalisation.

11. Clapet anti-retour (1) selon l'une quelconque des revendications précédentes comportant un système de fixation (2) à section circulaire pour se fixer à une paroi interne circulaire de la canalisation (3) et dans lequel la section circulaire et la partie mobile (4b) partagent le même centre.

12. Clapet anti-retour (1) selon l'une quelconque des revendications précédentes comportant un raidisseur (7) destiné à être fixé à un système de fixation (2) du clapet anti-retour (1) sur la canalisation (3), la portion fixe (4a) étant fixée au raidisseur (7) et la portion mobile (4b) étant en contact avec le raidisseur (7) pour bloquer le flux de fluide, le raidisseur (7) étant annulaire.

13. Clapet anti-retour (1) selon la revendication précédente dans lequel le raidisseur (7) forme une marche et la lèvre (4b') possède une forme complémentaire recouvrant la marche.

14. Clapet anti-retour (1) selon l'une des revendications 12 et 13 dans lequel la deuxième extrémité de la porte (4) comporte deux trous traversants (8) et le raidisseur (7) comporte deux tiges (7a), les deux tiges (7a) passant dans les deux trous traversants (8) pour étirer la porte (A) selon la direction longitudinale de la canalisation.

## Patentansprüche

1. Rückschlagventil (1) für eine Rohrleitung (3), umfassend:
- eine Tür (4) mit im Wesentlichen konischer Form, die dazu konfiguriert ist, den Durchgang eines Fluids durch eine Rohrleitung (3) in einer ersten Bewegungsrichtung (A) zuzulassen und den Durchgang des Fluids durch die Rohrleitung (3) in einer zweiten Bewegungsrichtung (B), die der ersten Bewegungsrichtung (A) entgegengesetzt ist, zu verhindern, wobei die Tür (4) ein erstes Ende mit einem feststehenden Abschnitt (4a) und einem beweglichen Abschnitt (4b) aufweist, wobei der bewegliche Abschnitt (4b) in Bezug auf den feststehenden Abschnitt (4a) durch Verformung des beweglichen Abschnitts (4b) zwischen einer Position, die den Durchgang des Fluids zulässt, und einer Position, die den Durchgang des Fluids verhindert, beweglich ist, wobei die Tür (4) einen Querschnitt hat, der vom ersten Ende bis zu einem zweiten Ende in der zweiten Bewegungsrichtung (B) abnehmend ist, wobei die Tür (4) im beweglichen Abschnitt (4b) eine Lippe (4b') definiert, wobei die Lippe (4b') sich verformt, um den Durchgang oder die Blockierung des Fluids zu gewährleisten, wobei die Tür (4) ein erstes Ende mit einem ringförmigem Querschnitt aufweist, wenn die Tür (4) in der Position ist, die den Durchgang des Fluids verhindert;
wobei das Rückschlagventil (1) **dadurch gekennzeichnet ist, dass**:
- das erste Ende der Tür (4) zwei Scharniere (4b") definiert, die den feststehenden Abschnitt (4a) und die bewegliche Lippe (4b') des beweglichen Abschnitts (4b) trennen;
- die Tür (4) einen Querschnitt hat, der vom ersten Ende bis zum entgegengesetzten zweiten Ende in der zweiten Bewegungsrichtung (B) abnehmend ist, wobei das erste Ende die Lippe (4b') und die zwei Scharniere (4b") definiert, wobei die Lippe sich (4b') in Richtung des zweiten Endes erstreckt;
- die Tür (4) in der Position, die den Durchgang des Fluids verhindert, am zweiten Ende frei von einem kreisförmigen Querschnitt in Schnittebenen senkrecht zur ersten Bewegungsrichtung (A) ist;
- die zwei Scharniere (4b") einen Krümmungsradius aufweisen, der kleiner ist als der Krümmungsradius der beweglichen Lippe (4b') in der Position, die den Durchgang von Fluid verhindert.

2. Rückschlagventil (1) nach Anspruch 1, wobei die Tür (4) zwei Verstärkungsbereiche (5) aufweist, die eine der Krümmung der beweglichen Lippe (4b') und der Scharniere (4b") entgegengesetzte Krümmung definieren, wobei die zwei Verstärkungsbereiche (5) den beweglichen Abschnitt (4b) und den feststehenden Abschnitt (4a) trennen.

3. Rückschlagventil (1) nach einem der Ansprüche 1 und 2, wobei die zwei Scharniere (4b") sich in Richtung des zweiten Endes über die bewegliche Lippe (4b') hinaus erstrecken.

4. Rückschlagventil (1) nach einem der Ansprüche 1 bis 3, wobei die Scharniere (4b") sich über weniger als die Hälfte der Länge der Tür (4) erstrecken, wobei die Länge entlang der Längsrichtung der Rohrleitung gemessen wird.

5. Rückschlagventil (1) nach einem der vorherigen Ansprüche, wobei die Lippe (4b') in Richtung des zweiten Endes durch einen Schaft (6) verlängert wird, wobei der Schaft (6) eine flache Bodenwand oder eine Wand mit einem Krümmungsradius größer als 85 % des Krümmungsradius der Lippe (4b') aufweist.

6. Rückschlagventil (1) nach dem vorherigen Anspruch, wobei der Schaft (6) eine Breite aufweist, die auf mindestens 50 % der Länge der Tür (4) mindestens 33 % der Innenbreite der Rohrleitung (3) ausmacht.

7. Rückschlagventil (1) nach einem der Ansprüche 2 bis 6, wobei die Verstärkungsbereiche (5) in Bezug auf den feststehenden Abschnitt (4a) beweglich angebracht sind.

8. Rückschlagventil (1) nach einem der vorherigen Ansprüche, wobei die Tür (4) eine Ebenensymmetrie aufweist und wobei das zweite Ende der Tür (4) oberhalb einer Ebene liegt, die durch die zwei Scharniere (4b") geht und senkrecht zur Symmetrieebene steht, wobei der bewegliche Abschnitt (4b) des ersten Endes unterhalb dieser Ebene liegt.

9. Rückschlagventil (1) nach einem der Ansprüche 2 bis 7, wobei die Tür (4) eine Ebenensymmetrie aufweist und wobei das zweite Ende der Tür (4) oberhalb einer Ebene liegt, die durch die zwei Verstärkungsbereiche (5) geht und senkrecht zur Symmetrieebene steht, wobei der bewegliche Abschnitt des ersten Endes unterhalb dieser Ebene liegt.

10. Rückschlagventil (1) nach einem der vorherigen Ansprüche, wobei der bewegliche Abschnitt (4b) sich über eine erste Länge zwischen den zwei Scharnieren (4b") entlang der Längsrichtung der Rohrleitung erstreckt, und wobei die Lippe (4b') mindestens 50 % der ersten Länge entlang der Längsrichtung der Rohrleitung ausmacht, wobei die Lippe (4b') entlang einer Schnittebene senkrecht zur Längsrichtung der Rohrleitung einen konstanten Krümmungsradius aufweist.

11. Rückschlagventil (1) nach einem der vorherigen Ansprüche, umfassend ein Befestigungssystem (2) mit einem kreisförmigen Querschnitt zur Befestigung an einer kreisförmigen Innenwand der Rohrleitung (3), und wobei der kreisförmige Querschnitt und der bewegliche Abschnitt (4b) denselben Mittelpunkt teilen.

12. Rückschlagventil (1) nach einem der vorherigen Ansprüche, umfassend eine Versteifung (7), die dazu bestimmt ist, an einem Befestigungssystem (2) des Rückschlagventils (1) an der Rohrleitung (3) befestigt zu werden, wobei der feststehende Abschnitt (4a) an der Versteifung (7) befestigt ist und der bewegliche Abschnitt (4b) mit der Versteifung (7) in Kontakt ist, um den Fluidstrom zu blockieren, wobei die Versteifung (7) ringförmig ist.

13. Rückschlagventil (1) nach dem vorherigen Anspruch, wobei die Versteifung (7) eine Stufe bildet und die Lippe (4b') eine komplementäre Form aufweist, die die Stufe bedeckt.

14. Rückschlagventil (1) nach einem der Ansprüche 12 und 13, wobei das zweite Ende der Tür (4) zwei Durchgangslöcher (8) umfasst und die Versteifung (7) zwei Stäbe (7a) umfasst, wobei die zwei Stäbe (7a) durch die zwei Durchgangslöcher (8) verlaufen, um die Tür (A) in Längsrichtung der Rohrleitung zu strecken.

## Claims

1. Check valve (1) for a pipe (3) comprising :
- a gate (4) of substantially conical shape configured to allow the passage of a fluid in a pipe (3) in a first direction of movement (A) and to prevent the passage of the fluid in the pipe (3) in a second direction of movement (B) opposite to the first direction of movement (A), the gate (4) having a first end with a fixed portion (4a) and a movable portion (4b), the movable portion (4b) being movable relative to the fixed portion (4a) by deformation of the movable portion (4b) between a position allowing fluid passage and a position preventing fluid passage, the gate (4) being of decreasing cross-section from the first end to a second end in the second direction of movement (B), the gate (4) defining a lip (4b') in the movable portion (4b), the lip (4b') deforming to ensure fluid passage or preventing fluid passage, the gate (4) having a first end with an annular cross-section when the gate (4) is in the position preventing fluid passage;
- the first end of the gate (4) defines two hinges (4b") separating the fixed portion (4a) and the movable lip (4b') of the movable portion (4b);
- the gate (4) has a decreasing cross-section from the first end to the opposite second end in the second direction of movement (B), the first end defining the lip (4b') and the two hinges (4b"), the lip (4b') extending towards the second end;
the check valve (1) being **characterized in that**:
- the gate (4) is devoid of circular cross-section in cross-sectional planes perpendicular to the first direction of movement (A) in the position preventing fluid passage, at the second end;
- the two hinges (4b") have a radius of curvature smaller than the radius of curvature of the movable lip (4b') in the position preventing fluid passage.

2. Check valve (1) according to claim 1 wherein the gate (4) has two reinforcement zones (5) defining a curvature opposite to the curvature of the movable lip (4b') and the hinges (4b"), the two reinforcement zones (5) separating the movable portion (4b) and the fixed portion (4a).

3. Check valve (1) according to one of claims 1 and 2 wherein the two hinges (4b") extend beyond the movable lip (4b') towards the second end.

4. Check valve (1) according to any one of claims 1 to 3 wherein the hinges (4b") extend over less than half the length of the gate (4), the length being measured in the longitudinal direction of the pipe.

5. Check valve (1) according to any of the preceding claims wherein the lip (4b') is extended by a tail (6) towards the second end, the tail (6) having a flat bottom wall or with a radius of curvature greater than 85% of the radius of curvature of the lip (4b').

6. Check valve (1) according to the preceding claim wherein the tail (6) has a width which represents at least 33% of the internal width of the pipe (3) over at least 50% of the length of the gate (4).

7. Check valve (1) according to any one of claims 2 to 6 wherein the reinforcement zones (5) are mounted so as to be movable relative to the fixed portion (4a).

8. Check valve (1) according to any of the preceding claims wherein the gate (4) has planar symmetry and wherein the second end of the gate (4) lies above a plane passing through the two hinges (4b") and perpendicular to the plane of symmetry, the movable portion (4b) of the first end lying below said plane.

9. Check valve (1) according to any one of claims 2 to 7 wherein the gate (4) has planar symmetry and wherein the second end of the gate (4) lies above a plane passing through the two reinforcement zones (5) and perpendicular to the plane of symmetry, the movable portion of the first end lying below said plane.

10. Check valve (1) according to any of the preceding claims wherein the movable portion (4b) extends over a first length between the two hinges (4b") in the longitudinal direction of the pipe and wherein the lip (4b') represents at least 50% of the first length in the longitudinal direction of the pipe, the lip (4b') having a constant radius of curvature in a sectional plane perpendicular to the longitudinal direction of the pipe.

11. Check valve (1) according to any of the preceding claims comprising a fastening system (2) with a circular section for fixing to a circular internal wall of the pipe (3) and wherein the circular section and the movable part (4b) share the same center.

12. Check valve (1) according to any of the preceding claims comprising a stiffener (7) intended to be fixed to a fastening system (2) of the check valve (1) on the pipe (3), the fixed portion (4a) being fixed to the stiffener (7) and the movable portion (4b) being in contact with the stiffener (7) to block the flow of fluid, the stiffener (7) being annular.

13. Check valve (1) according to the preceding claim wherein the stiffener (7) forms a step and the lip (4b') has a complementary shape covering the step.

14. Check valve (1) according to one of claims 12 and 13 wherein the second end of the gate (4) has two through holes (8) and the stiffener (7) has two rods (7a), the two rods (7a) passing through the two through holes (8) to stretch the gate (A) in the longitudinal direction of the pipe.
